# EUROPEAN PATENT SPECIFICATION

(11) **EP 2 834 204 B1**
(45) Date of publication and mention of the grant of the patent: **15.02.2017**
(21) Application number: 13716853.0
(22) Date of filing: 28.03.2013
(51) Int. Cl.: C04B 18/26, C04B 28/04, C04B 40/00

(54) **WOOD-CONTAINING CONCRETE COMPOSITION**
HOLZHALTIGE BETONZUSAMMENSETZUNG
COMPOSITION DE BÉTON CONTENANT DU BOIS

(30) Priority: 02.04.2012 NL 2008581; 10.10.2012 NL 2009604
(43) Date of publication of application: 11.02.2015
(73) Proprietor: Greencem B.V., 5234 GD 's-Hertogenbosch (NL)
(72) Inventor: VAN BAKEL, Petrus, Kálmán, NL-5234 GD 's-Hertogenbosch (NL); TYAGI, Youva Raj, NL-5234 GD 's-Hertogenbosch (NL)
(74) Representative: V.O.
(86) International application number: PCT/NL2013/050230
(87) International publication number: WO 2013/151427

(56) References cited:
- EP-A1- 2 108 629
- EP-A1- 2 113 494
- JP-A- 10 297 951
- JP-A- 2005 073 538

## Description

The present invention relates to concrete compositions, especially to such containing wood as aggregates, and to construction materials and especially to wood-containing concrete compositions for such materials. The invention further relates to a process to produce concrete and to a concrete or concrete-like material obtainable by the method of the invention. Furthermore, the invention relates to the use of wood, including and sometimes even preferably waste wood, as aggregate material for or in the construction industry. Construction materials made therewith or produced in this way may find application in the preparation of several products including prefab products. Moreover, the wood material can be used as an absorbing aggregate material (absorbant) during or before it is used to produce said concrete compositions; in such use it is used in such a way that it stabilizes the concrete mixture suitably and a viable concrete mixture is produced. Finally, the invention is directed to articles made of said wood-containing material, including prefab materials; and directed to products as an alternative aggregate in the making of concrete, including other suitable applications including prefab materials.

The modern world is confronted with an ever growing mass of wood as a waste product originating mainly from construction and demolition activities and from, for example, the furniture industry, but also from other sources. Wood waste is often categorized according to the degree of its contamination, which essentially determines the possibilities of the recyclability. That is, the degree of its pollution or contamination determines whether the wood can be recycled or not. Clean and unprocessed wood of class A in the Netherlands is suitable for, e.g., chipboard industry. Treated wood waste is generally not suitable for reuse as, for instance, an aggregate material and can only be used as secondary fuel, e.g. for energy generation in power stations. Some sorts of treated wood, *e.g*. impregnated, or creosol/creosote treated wood, contain excessive amounts of hazardous components which are released as emissions or during burning or through other related processes. Therefore, many types of treated wood are subject to hazardous waste regulations and, as a result, must often be processed against considerable costs needed for its disposal *etc.*

One of the aims of the present invention is to provide an economically viable or effective or cost effective method to use, reuse, or recycle wood, and especially waste wood. In a preferred embodiment, it is aimed to reuse the wood material in such a way that no hazardous substances are released conforming existing applicable norms and regulations, so that a safe solution is provided. Additionally, wood is used for its absorbing capacity in these particular embodiments; preferably this results in a stabilizing effect in the formation of concrete.

According to the present invention this is especially achieved by the use of wood and especially waste wood or wood as absorbent, in preparing a concrete composition. Especially, when fine fractions (in size) of wood are used, these work as an absorbent, and the capacity to absorb liquid phase materials helps to stabilize a concrete composition.

This is surprising and contrary to normal notion, since the use of wood in concrete compositions is prejudiced as cement normally repels organic matter or materials such as wood and normally there is generally no affinity of the constituents of wood with cement. Low compatibility and low adhesion of cement to organic matter- or materials tends to result in a fragile or brittle material; or at least would result in a material which is not suitable for (viable) use in the construction industry. Moreover, wood is biodegradable or at least susceptible to biodegradation and has a short life span. Hence wood is generally believed not to be a good candidate for achieving the required durability when used in concrete. Normally, a wood matrix is not supportive for cementation systems to produce a concrete which finds application as concrete.

Only in a few proposals, wood is used in a cement composition.

For instance, in US-A-2007/0261607 wood fibers or wood flakes are used instead of asbestos in a fiber reinforced cement product. In order to get a fiber reinforced composition having more or less the same properties as the asbestos based product, the composition requires the presence of 50-65 mass-% of an amorphous siliceous material, not containing crystalline silica, such as silica sand, silica powder, diatomaceous earth, silica fume, fly ash, bottom ash, blast furnace slag, steel slag and sodium silicate. The preferred cement material is Portland cement, which is used in amounts of 25-45 mass-%. The preferred woody material is woody pulp containing fine fibers having a fiber diameter of not more than 100 µm. The use of aluminosilicates seems not described.

EP-A-2 108 629 teaches a construction material, intended for thermal and acoustic insulation, that allows to reduce the concentration of volatile organic compounds in the air. This construction material is based on 40-60% wood wool fibers, and 40-60% of a binder comprising 3-50 wt.% zeolite, 20-70 wt.% cement and 20-40 wt.% lime. In all working examples, (Ca, K₂, Na₂, Mg)₄Al₉Si₄O₉₈·24H₂O is used and this material is used to absorb and convert volatile organic compounds from air into less harmful compounds.

Further, JP-A-10297951 teaches a cement composition, wherein wood material can be present, and wherein a zeolite having a BET specific surface area of 10-700 m²/g may be present. This zeolite is used to release Na or K ions promoting the hardening of the cement.

In JP-A-2005073538, a rooftop block material is described compring wood chips, perlite and a solidifier. Zeolite in powdery form is used as solidifier in the examples; the solidifier fills the gaps between the wood chips covered with perlite and leads to a denser product. Document EP 2 108 629 A1 discloses a composition comprising wood fibres and a hydraulic binder, the hydraulic binder comprising a cement, lime and a zeolite. D1 aims inter alia to reduce the emission of VOC.

According to the present invention, a construction composition is provided wherein, however, cement adheres - or is induced to adhere - effectively to wood, resulting in a uniform or homogeneous material, which combines the structural or compositional advantages of both wood and concrete, which leads to a concrete which is suitable for its use in the construction industry. In fact, cement is induced to adhere to the organic matter of wood and after induction the structural and/or compositional advantages of wood and concrete become available. More particularly, the concrete of the invention may be considerably lighter in weight than conventional concrete, while retaining advantageous mechanical characteristics making it very suitable as a (light-weight) construction or building material; it is classifiable as a light-weight concrete. In addition, using (waste) wood in a concrete composition also saves primary raw materials (aggregates) such as sand and gravel, which primary raw materials are gradually fastly becoming scarce with time; in addition, it also leads to a considerable cost reduction. In this way, waste wood is reused, and it need not be burnt, so that the production of contaminants and emission of hazardous and green-house gasses, such as carbon dioxide, carbon monoxide, oxides of sulfur, nitrogen oxides, PAKs, dioxins and furans can be avoided suitably / significantly.

In a first embodiment, the present invention relates to a construction composition comprising cement, wood and a cement additive containing three different types of aluminosilicates which are described in detail herein-below. These types of aluminosilicates (referred to herein-below as (A), (B) and (C)) are, as the skilled person knows, essentially based on sodium, aluminium and silicon oxide.

The first aluminosilicate that is used is designated as zeolite (A) and comprises - on a dry basis - 20-30 wt.% Na₂O; 30-40 wt.% Al₂O₃; and 30-40 wt.% SiO₂, which aluminosilicate is a zeolite that has a tapped density (determined after 1250 taps of at least 400 g/l (said known method, for instance, being described by Dubrow and Rieradka in Technical Reports Nos. PA-TR-2092; AD-47231 of Picatinny Arsenal, Samuel Feltman Ammunition Labs. Dover N.J. (Nov. 1, 1954; OSTI ID: 4388372)); has an average particle size (determined by sedimentation analysis using a SediGraph 5100 marketed by Micromeritics) of 1.2-2.2 µm; has a calcium-binding capacity of at least 100 mg CaO/g on a 100% basis (anhydrous aluminosilicate) (as described in EP-A-0 384 070); has a pH (in a 5% aqueous suspension at room temperature using a conventional pH meter) above 6; and preferably above 9; has an ignition loss (1 hour; 800 °C) of 15-30 %; and contains ≤50 ppm water soluble Fe and ≤ 500 ppm total Fe; ≤ 1 ppm water soluble Ni; ≤ 2 ppm water-soluble Cr; and ≤ 7 ppm water-soluble Ti.

The second aluminosilicate that is used is designated as zeolite (B) and is a small particle size aluminosilicate or zeolite that comprises - on a dry basis - 15-35 wt% Na₂O; 25-40 wt.% Al₂O₃ ; and 20-45 wt.% SiO₂; has a pH in the range of 7-12 and preferably in the range of 9-12; has an average particle size (determined by sedimentation analysis using a SediGraph 5100 marketed by Micromeritics) of 0.7-2.4, and preferably from 0.9-1.5 µm; has a bulk density of 400-600 g/l; and contains less than 50 ppm iron and less than 5 ppm Ti.

The third aluminosilicate that is used is designated as zeolite (C) and comprises 10-30 wt.% Na₂O; 20-40 wt.% Al₂O₃ and 10-50 wt.% SiO₂, which aluminosilicate is a zeolite that has a tapped density of 300-600 g/l; has an average particle size (D50) of 1-5 µm; wherein less than 0.1 wt% of the particles have a size of less than 0.1 µm; has a pH above 6, and has an ignition loss of 16-24%.

These three different aluminosilicates are described in detail in EP-A-2 113 494. Preferably, these three types are combined in a weight ratio of A:B:C of 1 : 0.8-1.2 : 0.8-1.2, and preferably about 1 : 1 : 1.

The cement additive is added to the construction composition of the invention in such an amount so that the cement comprises 1.2-3.0 wt. %, preferably 1.6-2.5 wt.% and more preferably 2-2.3 wt.% aluminosilicates drawn to the total weight of aluminosilicates and cement. Good results are obtained when the construction composition comprises 0.05-0.5 wt.%, preferably 0.1-0.3 wt.% of the cement additive.

The cement to be used in the present invention can be selected from all known cements. Preferably, the invention uses Portland cement and/or blast-furnace or high-oven cement; suitable cements are identified by the following types CEM I 32,5 R, CEM I 42,5 R, CEM I 52,5 R, CEM II/B-V 32,5 R, CEM III/A 32,5 N, CEM III/A 42,5 N, CEM III/A 52,5 N, CEM III/B 32,5 N and CEM III/B 42,5 N *etc.* Preferably ENCI CEM III 42,5 B LH/HS N type cement, or CEM I 52.5 R is used. Also blends of different cements can be used. In the composition of the invention, the cement is used in an amount of 80-500 kg/m³, preferably 90-450 k/m³ and most preferably 100-400 kg/m³ in the final product.

A unique characteristic of the construction composition of the invention is that up to 70 vol.% (or even more) of wood can be incorporated (as an aggregate) therein, drawn to the volume of the final construction composition. Preferably, the composition comprises from 5 to 70 vol. % of wood, more preferably 10-50 vol. %. In order to incorporate more than 50 vol. % of wood in the composition of the invention, the wood fraction used is preferably is pretreated as described herein-below. It is even possible to use wood as the sole aggregate material.

Such a pretreatment may encompass one or more of the following processing treatments. Firstly, considerable advantages, especially in binding, may be obtained by sieving, optionally after breaking or shredding, wood to suitable size fractions, like up to 12 mm, preferably up to 9 mm and more preferably up to 5 mm and most prefably up to 2 mm; some bigger parts can also be used, but these provide a rough surface and lead to lower strength of the final concrete material. A second treatment is a chemical treatment, whereby the ionic groups of the (waste) wood become available for chemical reactions and induce chemical bonding in such a way that both cement and the cement additives therein react in such a way that desirable concrete parameters, like compressive strength and bending strength are achieved. Suitable ionic environments provide suitable pH and suitable redox potential which help the cement additives to work more efficiently. In addition, suitable pretreatment also influences the homogeneity and workability of the produced concrete mixture.

More in general, the wood suitable to be used in the present invention has preferably an average particle size (wherein particle size refers to the largest size of a particular piece of wood) of about 5-50 mm, preferably 10-30 mm and even more preferably 10-20 mm. To obtain wooden fractions in this range of particle sizes, the wood may for instance be subjected to shredding or other techniques to restrict the sizes of the wood to the preferred average value. For some specific embodiments, see also herein-below, also finer fractions of wood (< 10 mm; and < 2 mm) are used.

The wood suitable for the present invention can be any kind of wood. Although fresh or clean wood may be used, preferably waste wood is employed, offering thereby an environmental friendly process of utilisation of wood waste. Waste wood of any category may be used, including treated wood containing hazardous substances. Such substances can, if needed or desired, be controlled or neutralized by additional additives or suitable preservatives, such as one or more preservatives commonly used for enhancing the durability, *e.g*. chromated copper arsenate (CCA), ammonia copper arsenate (ACA), ammonia copper zinc arsenate (ACZA), acid copper chromate (ACC), copper naphtenate, pentachlorophenol, creosote, borates, and the like.

Another suitable waste wood source originates from trees damaged by fungi, insects or birds, or partially biodegraded wood. An example of such a source is pine trees which are infected by insects like the mountain pine beetle *etc.*

In a preferred embodiment, wood fractions originating from or present in sieve sand is used.

Without wishing to be bound to any theory, it is believed that by using the three different zeolites, flexibility exists in creating all kinds of interactions between the wood material present, the cement material and any other constituents. By this mutual cooperation, the end result is predictable and leads to construction materials having favorable effects, such as high strength. In the working examples herein-below, it is shown that when using the composition according to the invention, considerable benefits are obtained when compared to the situation, wherein no aluminosilicates are present, or wherein only one aluminosilicate is present.

Besides wood, the composition may comprise other aggregates. Various aggregates typically used in cement compositions may be employed, e.g. coarse aggregates such as gravel, limestone, or granite, and fine aggregates such as sand. It is particularly preferred to use waste materials as aggregates, e.g. soils, including contaminated soil, such as heavy metal contaminated soil, ashes, sieve sand, construction waste, furnace dust, harbor sludge, lead slag, barites sludge, railway ballast, jet grit, iron slag, glass beads, waste incineration slag, grit of different sizes, fly ash, clay, stony mixture, jet dust, crushed asphalt, rubbish, silicon residue, sand, *etc.* In a preferred embodiment of the invention, waste incineration slag, flying ash, furnace waste derived from car batteries and/or jet grit are used.

In a preferred embodiment, the composition comprises fines as fillers. Such fines fill the gaps between the other constituents of the compositions prepared. The use of fines, such as microsilicas (but also other fine materials may be used), leads to increases in hardness and/or strength. In general, the finer the fines are, the more pronounced the effect on hardness and/or strength will be. In addition, the density of the end product increases.

Preferably, the composition of the invention comprises at least one base. Bases are chemical compounds that, when dissolved in water, give a solution with a hydrogen ion activity higher than that of pure water, *i.e.* a pH higher than 7.0 under standard conditions. Typical examples of bases are the oxides and hydroxides of metals, especially, of alkali and alkaline earth metals. Without wishing to be bound to any theory, it is believed that the base neutralizes acidic compounds present in wood waste, and provides an ionic molecular micro-environment which is suitable for the specific cement additives used in the construction material of the invention to induce suitable bonding with wood and cement. This results in a better adhesion between the wood and the cement. Very good results are obtained when using medium strong and weak bases having a pK_{b} from 1 to 7, preferably from 1.5 to 5, such as calcium oxide, calcium hydroxide, magnesium oxide, magnesium hydroxide, ammonia. More preferably, lime powder is used. Preferably, the composition comprises the base or bases in an amount of from 3-10 wt.% drawn to the weight of the cement used in the construction material.

More specifically, it is noted that dependent on the type and chemical condition of the wood, and especially the waste wood, (for example, some sources are acidic and some are not so acidic, the pH may range from 4.5 to 7.6), the skilled person can determine suitable amounts of base. As an indication, often an amount of around 4-6 wt.% of a commercial base (w/w of the cement) is used. Typically, the cement weight ranges from 180 kg/m³ to sometimes up to 350 kg/m³.

The construction composition of the invention can further comprise other components and additives known in the art such as water-reducing agents, retarders, extenders, curing accelerators, stabilizers, air entrants and the like. Preferably, rheology controllers (wood absorbs lots of water, which may seriously affect the workability) and additives to control the overall ionic environment are used, for instance to achieve the required workability.

In another aspect the present invention relates to a method for immobilizing waste wood contaminants, optionally to prepare a construction material, comprising the steps of combining a wood-containing construction composition according to the invention expected to contain contaminants, with a suitable amount of water, followed by curing. This concerns a conventional method to prepare a concrete composition, yet uses wood as a part of or instead of usual or conventional aggregates.

For that, a suitable amount of water is added to the solid aggregates in order to make a mortar-like material that, after hardening, results in a final, concrete-like product to be used as a construction material according to the invention. Suitable amounts of water can easily be determined by a person skilled in the art. Generally, suitable amounts vary between 4 and 22 vol.%, preferably between 5 and 20 vol.%. Concrete technologists call this the water: cement (W/C) factor which has a relation to water absorption by aggregates, chemical reaction needed for the hydration process and also getting required workability (etc), which depends on the water already present in the aggregate material (in the present invention including wood) and the total amount of water needed to be added from outside. This situation bears some complexity, as the skilled person knows by practical experience, in that the (internal) water present in the aggregate (wood fractions) is not "free water"; in many conditions it is not available for cement hydration (and hence cement hardening) and for reaction with the cement additives used in this invention. Sometimes when the waste is oversaturated with water, there is free water and this free water is available for cement hydration and other chemical processes. Normally, internal water and outside water (which is added from outside), are taken together and this is taken as total water of the system and the amount of water required to be added is determined on the basis of actual water present in the system and the estimation of the total amount of required water. In this way, the amount of outside water can be determined on the basis of these parameters, concrete technologists report a W/C factor, with reference to the amount of cement used in the mixture.

Optimal results are obtained when the wood parts are first contacted with (soaked in) about 20-40% of the water with the other aggregates, followed by addition of other constituents of the construction material of the invention and finally the remaining amount of the water is carefully added.

In preferred embodiments, wood can be used as moisture absorbent and especially as a water-absorbing material before it is introduced in a concrete recipe in accordance with the present invention. Desirably, in these embodiments the wood particles are dried before being used so that absorbing capacity of the wood is increased.

Water containing dispersions or emulsions or other two-phase systems may first be contacted with wood, after which step the wood is, either *per se* or in combination with the rest of the dispersion, emulsion or other two-phase system, contacted with the other components of the concrete composition to be made.

In these preferred embodiments, the wood generally is smaller in size than describes herein-above. Very suitable results are obtained with wood having an average particle size of less than 20 mm; preferred average sizes are between 2 and 10 mm; and even lower than 2 mm.

For example, very suitable results are obtained when wood is added to compositions containing water and organic material and especially hydrophobic material, such as water-oil emulsions or dispersions.

An example of such a composition is oil sludge, and more in particular drilling oil sludge or muds, which contains water, oil, sand or other sediment, and optionally additives. Nowadays, such a sludge is often "diluted" with about an equal weight of cement (1 ton sludge with about 1 ton cement), after which it is dumped and for instance disposed as a suitable landfill. A potential problem with this approach is that leaching occurs from the cement product formed and final mixture is often not fully stabilized and there is an urgent need to improve this traditional method to advanced level so that it conforms to techno-economic viability and also conforms to environmental norms of the land.

For example, liquid samples produced at, e.g., oil fields are highly contaminated with oil and gaseous compounds. Because of the amounts of oil fractions present therein, cement *per se* is not suitable to provide much other advantage than dilution. It has been proposed to use in addition to cement also fly ash, but such a combination does not produce or give rise to considerably better results and there is an urgent need to improve the existing method and this invention has potentials to provide suitable alternative solutions to traditional problems. What would be desirable is to have a material that prevents leaching of inorganic and organic materials to the environment, so that a value added product is produced for its practical application as a concrete rather than its disposal to a landfill.

The above mentioned requirement is achieved in this invention.

By adding first an amount of wood to such sludge, the wood absorbs a considerable amount of the water present in the sludge, and even some oil. Part of this absorbed water may evaporate from the wood, and the volume of the sludge plus wood may even shrink. Subsequently, cement and the additive mixture of A+B+C may be added in accordance with the present invention. This leads to concrete material in accordance with the invention, wherein the other constituents of the sludge are incorporated; these other constituents essentially do not leach out.

As a detailed example, this embodiment is elaborated for an oil sludge derived from an oily drilling mud.

Drilling mud is used to control subsurface pressures in oil well production systems. It lubricates the drill bit, stabilizes the well bore, and carries the cuttings to the surface, among other functions. Mud is pumped from the surface through the hollow drill string, exits through nozzles in the drill bit, and returns to the surface through the annular space between the drill string and the walls of the hole.

Oil sludge or drilling fluids or muds comprise a base fluid (water, diesel or mineral oil, or a synthetic compound), weighting agents (most frequently barium sulfate [barite] is used), bentonite clay to help remove cuttings from the well and to form a filter cake on the walls of the hole, lignosulfonates and lignites to keep the mud in a fluid state, and various additives that serve specific functions.

Historically, the drilling industry has used primarily water-based muds (WBMs) because these are inexpensive and easily prepared. The used mud and cuttings from wells drilled with WBMs can be readily disposed of onsite at most onshore locations. WBMs and cuttings can also be discharged from platforms in many offshore waters, as long as they meet current effluent limitations guidelines (ELGs), discharge standards, and other permit limits. WBMs do not present environmental problems for organisms living in the water column or widespread problems for organisms living on the sea floor. However, for difficult drilling situations, such as wells drilled in reactive shale, deep wells, and horizontal and extended-reach wells, WBMs do not offer consistently good drilling performance. For these types of drilling situations at onshore sites, the industry relies primarily on oil-based muds (OBMs). OBMs perform well, but may be subject to more complicated disposal requirements for onshore wells. OBMs contain diesel or mineral oil as the base fluid and may be harmful to the environment when discharged to the sea or land. Consequently, the Environmental Protection Authorities prohibited any discharge of OBMs or their (contaminated) cuttings from offshore platforms.

In an initial step of the presently used method, at a treatment unit in the fields, oil sludge is filtered through a coarse filter to remove bigger agglomerations or stony material as the case may be. The oil sludge is directly pumped from the transporting tankers, specially designed for such materials.

The initially filtered oil sludge is transported to storage and mixing units, where oil sludge is mixed and to make it suitable for mixing with a mixture of PFA and Portland cement in a ratio of 50:50.

Subsequently, the heavy sludge is separated out to make a suitable use of the material.

The final product as prepared nowadays looks like a semi solidified wet concrete, which may be collected and transported to a local landfill for its final disposal.

In accordance with the present invention, as mentioned herein-above, at least a part, but even up to 100% of the aggregate material present in concrete may be formed by the wood material. Particularly, any percentage between more than 0 up to 100% of the aggregate used may be wood, but to obtain the favorable properties, one should preferably use at least 15 wt.%, more preferably at least 20 wt.%, more preferably at least
50 wt.% of wood as aggregate material, which is according to the requirement of the project and can be optimized at field it-self. Suitably, less than 80 wt.%, and preferably less than 70 wt.% of the aggregate materials are formed by wood.

With this process a product results that is very advantageous in its leaching behavior and that can be used as for instance a building material.

Preferably, the mortar-like mixture prepared is compacted, pressed, vibrated, rolled or otherwise processed into a desired form, optionally with a suitable framework.

In a further aspect, the present invention relates to a construction material obtainable by the method of the invention. This construction material combines the advantages of both a concrete material and wood. Compared to concrete, the material of the invention is preferably at least 10% lighter, preferably, at least 20% and most preferably at least 30% lighter than conventional concrete (which is produced without wood). The construction material of the invention is characterised by a density of less than 2000 kg/m³, preferably less than 1700 kgs/m³ or 1800 kg/m³, more preferably 1600 kg/m³ and even much less, such ass close to 1200 kg/m³. For comparison, the density of conventional concrete of a similar composition wherein no wood is incorporated is in the range of 2200 - 2400 kg/m³ or sometimes even higher up to 2600 kg/m³.

At the same time, the inventive material still may have comparable mechanical characteristics as conventional concrete such as high strength. For instance, for a construction concrete according to the present invention, which concrete contains 30-40 vol.% wood compressive strengths (CS) of more than 20 N/mm² could be obtained with a modest amount of cement. Moreover, a bending strength (BS) of more than 1 to 2 and even 3 N/mm² is achievable. Further, the material of the invention absorbs sound/noise and other radiations. This is especially advantageous in combination with the light weight, making it very attractive for this concrete to be used for these absorption applications.

Compared to conventional wood materials, the composition of the invention is characterized by a great durability. Under durability it is meant the resistance of a material to decay or, more specifically, to biodegradation of the wood used therein. The material of the invention preferably does not show any decay in at least 30 years, preferably at least 35 years, yet more preferably in 40 years and longer. While conventional wood under normal conditions must be treated with preservatives to provide for a comparable durability, and these preservatives used may be harmful to the environment, the construction material of the invention does not need to be chemically treated for the prevention of bio-degradation.

Another advantage of the present invention, as also mentioned above, is that (potentially) hazardous components or contaminants present in the waste wood or associated with wood used as absorbent in contaminated water-containing compositions such as the drilling mud described herein-above, are stabilized and immobilized; that is, such materials will not or hardly leach out or otherwise escape from the composition. Particularly, it is possible to immobilise the pollutants in such a way that the end product meets the requirements and specifications according to established governmental legislation and standard norms, so that the produced concrete can be used as a construction material.

The material of the invention is especially suitable for its use as a construction material and in particular for production of prefab construction products, such as poles, pre-fabricated walls which can be used as sound absorbing walls for controlling noise pollution, light-weight concrete for areas which are sludgy, walls for earthquake prone zones, slabs, tiles *etc.*

The invention will be further described on the basis of the following, non-limiting working examples. If percentages are given, these are percentages by weight, unless otherwise indicated.

### Example 1

1311 wood waste was shredded to pieces of 10-30 mm in size. This material was pre-mixed with 1321 Horzol (broken railway ballast), 88 1 Furaan (waste from car batteries), 451 waste incineration slags and 45 1 jet grit. 100 1 of water was added and the wet mixture is mixed for some 4 minutes. 350 kg cement (ENCI, CEM III B 42,5 LH/HS N) and 70 kg of the cement additive described in working example 1 of EP-A-2 113 494 were added, while also batch-wise adding 250 1 water, which mixture was mixed until homogenous.

The mixture was shaped into the form of poles and allowed to cure. The pole has a density of about 1.4 kg/m³, a compressive strength of 22 N/mm² and a bending strength of 1.7 N/mm².

### Example 2

In a suitable mixing vessel, 2.060 g of shredded wood particles, which were dried overnight, having an average particle size of 8.5 mm, were mixed with 3.1 kg oil sludge. The oil sludge comprised 43 wt.% crude oil, in drilling mud and water (total solids: 24 wt.%). This mixture was gently stirred to allow absorption of water in the wood particles.

Subsequently, 360 g of cement and 36.8 g of the cement additive mixture also used in Example 1 were added. The total volume was determined to be 4.11.

This mixture was mixed until a homogeneous mass was obtained. This mass had a reduced volume of 24.2 vol.%. This mass was formed into 2 cubes, which were allocated to cure. The density was determined to be 1363 kg/m³.

One of these cubes was subjected to a leaching test. Leaching was only detected at the level of µg/l.

### Example 3

1311 of wood waste was shredded to pieces of 10-30 mm in size. This material was pre-mixed with 132 1 broken railway ballast and, 88 1 waste incineration slags. 100 1 of water was added and the wet mixture is mixed for some 4 minutes. 350 kg cement (ENCI, CEM III B 42,5 LH/HS N), 28 kg of microsilica and 14 kg of the cement additive described in working example 1 of EP-A-2 113 494 were added, while also batch-wise adding 250 1 water, which mixture was mixed until homogenous.

The same process was also carried out using 14 kg of only the first zeolite described in said working example 1 of EP-A-2 113 494 and also without using any of the three zeolites.

The 3 mixtures were shaped into the form of poles and allowed to cure. The following results were found for the compressive strengths and bending strengths (both in N/mm²) after 7, 14 and 28 days:

| | 7 days | 14 days | 28 days |
|---|---|---|---|
| 3 zeolites | | | |
| Compressive strength | 5.3 | 12 | 23.5 |
| Bending strength | 4.6 | 4.8 | 5.3 |
| 1 zeolite | | | |
| Compressive strength | 1.5 | 5.7 | 9.6 |
| Bending strength | 1.2 | 1.2 | 1.3 |
| no zeolites | | | |
| Compressive strength | 0.5 | 1.9 | 2.9 |
| Bending strength | 0.4 | 0.5 | 0.6 |

This comparative example shows the considerable effect of using the 3 zeolites according to the present invention with the absence of zeolite or the presence of only 1 zeolite. Particularly, a very flexible system in the sense of interactions with the other constituents is obtained.

## Claims

1. Construction composition comprising wood and a cement additive comprising three different types of aluminosilicates, wherein one of the aluminosilicates comprises (A) - based on dry weight - 20-30 wt.% Na₂O; 30-40 wt.% Al₂O₃ ; and 30-40 wt.% SiO₂, which aluminosilicate has a tapped density of at least 400 g/l; an average particle size of 1.2-2.2 µm;
has a calcium-binding capacity of at least 100 mg CaO/g on a 100% basis (anhydrous aluminosilicate); has a pH above 6; has an ignition loss (1 hour; 800 °C) of 15-30 %; and contains ≤50 ppm water soluble Fe and ≤ 500 ppm total Fe; ≤ 1 ppm water soluble Ni; ≤ 2 ppm water-soluble Cr; and ≤ 7 ppm water-soluble Ti;
wherein the second of the aluminosilicates is (B) a small particle size aluminosilicate and comprises - on a dry basis - 15-35 wt% Na₂O; 25-40 wt.% Al₂O₃; and 20-45 wt.% SiO₂; has a pH in the range of 7-12 and preferably in the range of 9-12; has an average particle size (determined by sedimentation analysis using a SediGraph 5100 marketed by Micromeritics) of 0.7-2.4, and preferably from 0.9-1.5 µm; has a bulk density of 400-600 g/l; and contains less than 50 ppm iron and less than 5 ppm Ti; and
wherein the third of the aluminosilicates comprises (C) 10-30 wt.% Na₂O; 20-40 wt.% Al₂O₃ and 10-50 wt.% SiO₂, which aluminosilicate has a tapped density of 300-600 g/l; has an average particle size (D50) of 1-5 µm; wherein less than 0.1 wt% of the particles have a size of less than 0.1 µm; has a pH above 6, and has an ignition loss of 16-24%.

2. Construction composition according to claim 1, wherein the three different aluminosilicates are combined in a weight ratio of A:B:C of 1 : 0.8-1.2 : 0.8-1.2, and preferably about 1 : 1 : 1.

3. Construction composition according to claim 1 or 2, comprising 1.2-3.0 wt.%, preferably 1.6-2.5 wt.% and more preferably 2-2.3 wt.% aluminosilicates drawn to the total weight of aluminosilicates and cement.

4. Construction composition according to any of the preceding claims, comprising 0.05-0.5 wt.%, preferably 0.1-0.3 wt.% of the cement additive.

5. Construction composition according to one or more of the preceding claims, comprising 5-70 vol.%, preferably 10-50 vol.% of wood.

6. Construction composition according to one or more of the preceding claims, wherein the wood contains one or more preservatives, selected from the list of chromated copper arsenate (CCA), ammonia copper arsenate (ACA), ammonia copper zinc arsenate (ACZA), acid copper chromate (ACC), copper naphtenate, pentachlorophenol, creosote, borates.

7. Construction composition according to one or more of the preceding claims, wherein the wood is pre-treated.

8. Construction composition according to any of the preceding claims, further comprising at least one base.

9. Construction composition according to claim 8, wherein the base is selected from calcium oxide, calcium hydroxide, magnesium oxide, magnesium hydroxide and ammonia and calcium carbonate.

10. Construction composition according to any one of the preceding claims, comprising fines, filling the gaps between the other constituents.

11. Method for immobilizing waste wood optionally to prepare a construction material, comprising the steps of combining a wood-containing construction composition according to one or more of claims 1-10 with a suitable amount of water, followed by curing.

12. Method for immobilizing waste material comprising adding wood particles to contaminated water containing compositions, such as mud, drilling mud, sludge and other dispersions, emulsions of multiphase compositions, letting the wood particles absorb water present in these compositions, subsequently adding cement and the cement additives as defined in one or more of the claims 1-5, and forming a concrete material.

13. Construction material, preferably a prefab construction material, obtainable by the method of claim 11 or claim 12.

14. Use of the composition according to one or more of claims 1-10 in the preparation of, or use of wood as aggregate material in concrete for a construction material.

## Patentansprüche

1. Bauzusammensetzung, umfassend Holz und einen Zementzusatzstoff, umfassend drei verschiedene Arten von Alumosilikaten, wobei eines der Alumosilikate (A) - basierend auf Trockengewicht - 20-30 Gew.-% Na₂O; 30-40 Gew.-% Al₂O₃; und 30-40 Gew.-% SiO₂ umfasst, das Alumosilikat eine Klopfdichte von mindestens 400 g/l hat; eine mittlere Partikelgröße von 1,2-2,2 µm; ein Kalziumbindungsvermögen von mindestens 100 mg CaO/g auf einer 100-%-Basis (anhydrisches Alumosilikat) hat; einen pH über 6 hat; einen Glühverlust (1 Stunde; 800°C) von 15-30 % hat; und ≤50 ppm wasserlösliches Fe und ≤500 ppm Gesamt-Fe; ≤1 ppm wasserlösliches Ni; ≤2 ppm wasserlösliches Cr; und ≤7 ppm wasserlösliches Ti enthält;
wobei das zweite der Alumosilikate (B) ein Alumosilikat von kleiner Partikelgröße ist und - auf einer Trockenbasis - 15-35 Gew.-% Na₂O; 25-40 Gew.-% Al₂O₃; und 20-45 Gew.-% SiO₂ umfasst; einen pH im Bereich von 7-12 und bevorzugt im Bereich von 9-12 hat; eine mittlere Partikelgröße (bestimmt durch Sedimentationsanalyse unter Verwendung eines SediGraph 5100, vertrieben von Micromeritics) von 0,7-2,4 und bevorzugt von 0,9-1,5 µm hat; eine Raumdichte von 400-600 g/l hat; und weniger als 50 ppm Eisen und weniger als 5 ppm Ti enthält; und wobei das dritte der Alumosilikate (C) 10-30 Gew.-% Na₂O; 20-40 Gew.-% Al₂O₃ und 10-50 Gew.-% SiO₂ umfasst, das Alumosilikat eine Klopfdichte von 300-600 g/l hat; eine mittlere Partikelgröße (D50) von 1-5 µm hat; wobei weniger als 0,1 Gew.-% der Partikel eine Größe von weniger als 0,1 µm haben; einen pH über 6 hat und einen Glühverlust von 16-24 % hat.

2. Bauzusammensetzung nach Anspruch 1, wobei die drei verschiedenen Alumosilikate in einem Gewichtsverhältnis von A:B:C von 1 : 0,8-1,2 : 0,8-1,2 und bevorzugt ungefähr 1 : 1 : 1 kombiniert sind.

3. Bauzusammensetzung nach Anspruch 1 oder 2, umfassend 1,2-3,0 Gew.-%, bevorzugt 1,6-2,5 Gew.-% und bevorzugter 2-2,3 Gew.-% Alumosilikate, bezogen auf das Gesamtgewicht von Alumosilikaten und Zement.

4. Bauzusammensetzung nach einem der vorhergehenden Ansprüche, umfassend 0,05-0,5 Gew.-%, bevorzugt 0,1-0,3 Gew.-% des Zementzusatzstoffs.

5. Bauzusammensetzung nach einem oder mehreren der vorhergehenden Ansprüche, umfassend 5-70 Vol.-%, bevorzugt 10-50 Vol.-% Holz.

6. Bauzusammensetzung nach einem oder mehreren der vorhergehenden Ansprüche, wobei das Holz ein oder mehr Konservierungsstoffe enthält, ausgewählt aus der Liste von chromiertem Kupferarsenat (CCA), Ammoniumkupferarsenat (ACA), Ammoniumkupferzinkarsenat (ACZA), saurem Kupferchromat (ACC), Kupfernaphtenat, Pentachlorphenol, Creosot, Boraten.

7. Bauzusammensetzung nach einem oder mehreren der vorhergehenden Ansprüche, wobei das Holz vorbehandelt ist.

8. Bauzusammensetzung nach einem der vorhergehenden Ansprüche, ferner umfassend mindestens eine Base.

9. Bauzusammensetzung nach Anspruch 8, wobei die Base ausgewählt ist aus Calciumoxid, Calciumhydroxid, Magnesiumoxid, Magnesiumhydroxid und Ammonium- und Calciumcarbonat.

10. Bauzusammensetzung nach einem der vorhergehenden Ansprüche, umfassend Füller, die die Lücken zwischen den anderen Bestandteilen ausfüllen.

11. Verfahren zur Immobilisierung von Abfallholz, optional zur Herstellung eines Baumaterials, umfassend die Schritte Kombinieren einer holzhaltigen Bauzusammensetzung nach einem oder mehreren der Ansprüche 1-10 mit einer geeigneten Menge von Wasser, gefolgt von Aushärtung.

12. Verfahren zur Immobilisierung von Abfallmaterial, umfassend Zugeben von Holzpartikeln zu kontaminiertem Wasser, enthaltend Zusammensetzungen wie Schlamm, Bohrschlamm, Schlick und andere Dispergierungen, Emulsionen von mehrphasigen Zusammensetzungen, , um die Holzpartikel Wasser, das in diesen Zusammensetzungen vorhanden ist, absorbieren zu lassen, anschließend Zugeben von Zement und Zementzusatzstoffen, wie in einem oder mehreren der Ansprüche 1-5 definiert, und Bilden eines Betonmaterials.

13. Baumaterial, bevorzugt ein Fertigbaumaterial, erhältlich durch das Verfahren nach Anspruch 11 oder Anspruch 12.

14. Verwendung der Zusammensetzung nach einem oder mehreren der Ansprüche 1-10 bei der Herstellung von, oder Verwendung von Holz als Aggregatmaterial in Beton für ein Baumaterial.

## Revendications

1. Composition pour construction, comprenant du bois et un adjuvant pour ciment qui comporte des aluminosilicates de trois types différents, dans laquelle
- le premier (A) de ces aluminosilicates comprend, en pourcentages rapportés au poids à sec, de 20 à 30 % en poids de Na₂O, de 30 à 40 % en poids d'Al₂O₃ et de 30 à 40 % en poids de SiO₂, lequel aluminosilicate présente :
- une masse volumique à l'état tassé d'au moins 400 g/L,
- une taille moyenne de particules de 1,2 à 2,2 µm,
- un pouvoir de fixation de calcium d'au moins 100 mgCaO/g, sur la base de 100 % (aluminosilicate anhydre),
- un pH supérieur à 6,
- une perte à la calcination (1 heure à 800 °C) de 15 à 30 %,
- une teneur en fer hydrosoluble inférieure ou égale à 50 ppm, et une teneur totale en fer inférieure ou égale à 500 ppm,
- une teneur en nickel hydrosoluble inférieure ou égale à 1 ppm,
- une teneur en chrome hydrosoluble inférieure ou égale à 2 ppm,
- et une teneur en titane hydrosoluble inférieure ou égale à 7 ppm ;
- le deuxième (B) de ces aluminosilicates est un aluminosilicate en particules de petite taille qui comprend, en pourcentages rapportés au poids à sec, de 15 à 35 % en poids de Na₂O, de 25 à 40 % en poids d'Al₂O₃ et de 20 à 45 % en poids de SiO₂, et qui présente :
- un pH situé dans la gamme de 7 à 12 et de préférence dans la gamme de 9 à 12,
- une taille moyenne de particules (déterminée par analyse de sédimentation au moyen d'un appareil Sedigraph 5100 commercialisé par Micromeritics) de 0,7 à 2,4 µm et de préférence de 0,9 à 1,5 µm,
- une masse volumique à l'état tassé de 400 à 600 g/L,
- une teneur en fer de moins de 50 ppm,
- et une teneur en titane de moins de 5 ppm ;
- et le troisième (C) de ces aluminosilicates comprend de 10 à 30 % en poids de Na₂O, de 20 à 40 % en poids d'Al₂O₃ et de 10 à 50 % en poids de SiO₂, lequel aluminosilicate présente :
- une masse volumique à l'état tassé de 300 à 600 g/L,
- une taille moyenne de particules (D₅₀) de 1 à 5 µm, étant entendu que moins de 0,1 % en poids de ces particules ont une taille inférieure à 0,1 µm,
- un pH supérieur à 6,
- et une perte à la calcination de 16 à 24 %.

2. Composition pour construction, conforme à la revendication 1, dans laquelle les trois aluminosilicates différents sont combinés en des rapports pondéraux A/B/C de 1/0,8-1,2/0,8-1,2, et de préférence d'à peu près 1/1/1.

3. Composition pour construction, conforme à la revendication 1 ou 2, comprenant de 1,2 à 3,0 %, de préférence de 1,6 à 2,5 % et mieux encore de 2 à 2,3 % d'aluminosilicates, en poids rapporté au poids total des aluminosilicates et du ciment.

4. Composition pour construction, conforme à l'une des revendications précédentes, qui comprend de 0,05 à 0,5 % en poids et de préférence de 0,1 à 0,3 % en poids de l'adjuvant pour ciment.

5. Composition pour construction, conforme à l'une ou plusieurs des revendications précédentes, qui comprend du bois en une proportion de 5 à 70 % en volume et de préférence de 10 à 50 % en volume.

6. Composition pour construction, conforme à l'une ou plusieurs des revendications précédentes, dans laquelle le bois contient un ou plusieurs conservateur(s) choisi(s) dans la liste suivante : arséniate de cuivre chromé (ACC), arséniate de cuivre ammoniacal (ACA), arséniate de cuivre et de zinc ammoniacal (ACZA), chromate de cuivre acide (CCA), naphténate de cuivre, pentachloro-phénol, créosote, borates.

7. Composition pour construction, conforme à l'une ou plusieurs des revendications précédentes, dans laquelle le bois est un bois prétraité.

8. Composition pour construction, conforme à l'une des revendications précédentes, qui comprend en outre au moins une base.

9. Composition pour construction, conforme à la revendication 8, dans laquelle la base est choisie parmi de l'oxyde de calcium, de l'hydroxyde de calcium, de l'oxyde de magnésium, de l'hydroxyde de magnésium, et de l'ammoniac et carbonate de calcium.

10. Composition pour construction, conforme à l'une des revendications précédentes, comprenant de très fines particules qui comblent les interstices entre les autres constituants.

11. Procédé permettant d'immobiliser des rebuts de bois, en option pour préparer un matériau de construction, comportant une étape consistant à combiner une composition pour construction contenant du bois, conforme à l'une ou plusieurs des revendications 1 à 10, avec de l'eau en quantité appropriée, suivie d'une étape de durcissement.

12. Procédé permettant d'immobiliser des rebuts, comportant le fait d'ajouter des particules de bois à des compositions polluées contenant de l'eau, comme de la vase, des boues de forage, des boues de vidange et autres dispersions, émulsions ou compositions multiphases, le fait de laisser les particules de bois absorber l'eau présente dans ces compositions, le fait d'ajouter ensuite un ciment et des adjuvants pour ciment tels que définis dans l'une ou plusieurs des revendications 1 à 5, et le fait d'en faire un matériau de type béton.

13. Matériau de construction, de préférence matériau pour construction en préfabriqué, accessible par un procédé conforme à la revendication 11 ou 12.

14. Utilisation d'une composition conforme à l'une ou plusieurs des revendications 1 à 10 dans la préparation ou l'utilisation de bois en tant que matériau d'agrégats dans un béton pour matériau de construction.
